# EUROPEAN PATENT SPECIFICATION

(11) **EP 2 894 569 B1**
(45) Date of publication and mention of the grant of the patent: **04.10.2017**
(21) Application number: 13835884.1
(22) Date of filing: 29.08.2013
(51) Int. Cl.: G06F 13/00, H02J 13/00, H04Q 9/00, G08C 17/00, G05B 15/02

(54) **APPARATUS MANAGEMENT DEVICE**
GERÄTEVERWALTUNGSVORRICHTUNG
DISPOSITIF DE GESTION D'ÉQUIPEMENT

(30) Priority: 10.09.2012 JP 2012198637
(43) Date of publication of application: 15.07.2015
(73) Proprietor: Panasonic Intellectual Property Management Co., Ltd., Osaka-shi, Osaka 540-6207 (JP)
(72) Inventor: KAWASAKI, Makoto, Osaka 540-6207 (JP); HIROISHI, Akihiko, Osaka 540-6207 (JP); YAMAGUCHI, Hideaki, Osaka 540-6207 (JP); KITAMURA, Satoshi, Osaka 540-6207 (JP)
(74) Representative: Appelt, Christian W.
(86) International application number: PCT/JP2013/005121
(87) International publication number: WO 2014/038162

(56) References cited:
- WO-A1-2009/137654
- WO-A1-2011/055192
- JP-A- 2009 265 971
- JP-A- 2011 089 682
- JP-A- 2011 197 797
- US-A1- 2004 260 490
- US-A1- 2009 089 709

## Description

### TECHNICAL FIELD

This invention relates to an apparatus management device configured to manage apparatuses.

### BACKGROUND ART

As a conventional device for managing two or more apparatuses, a device configured to control two or more apparatuses using an apparatus information table in which the apparatuses are classified by area is disclosed in JP 2001-309455 A (hereinafter referred to as "Document 1"). For example, if a user wants to make his or her bedroom brighter, the device described in Document 1 selects, according to operations by the user, the "bedroom" from an area selection screen, and selects a "lighting apparatus" that is associated with the "bedroom" in the apparatus information table from a device selection screen. Thereafter, the device described in Document 1 controls the lighting apparatus such that the brightness level of the selected lighting apparatus increases to be higher than the current level.

Incidentally, in the conventional device described in Document 1, the user needs to select an apparatus to which a control content is to be changed from the two or more apparatuses, in order to change the ambient environment (living environment, for example) of the user to an environment desired by the user. The apparatuses include apparatuses that are not in operating states appropriate for the environment desired by the user, and apparatuses that are already in operating states appropriate for the environment desired by the user. However, the user does not know which apparatus is not in an operating state appropriate for the environment desired by the user. For this reason, the user needs to confirm whether the ambient environment of the user changes to the environment desired by the user, by changing the control contents of the apparatuses one by one, and as a result time and effort are required.

US 2009/089709 A1 describes a visualization system that generates customized visualization(s) in an industrial automation environment and that includes an interface component which receives input concerning displayed objects and information, a context component that can detect, infer or determine context information regarding an entity, and a visualization component that dynamically generates a visualization from a set of display object to present to the entity that is a function of the received information and inferred or determined entity context.

US2004/260490 A1 describes a home energy management system which is capable of calculating, based on equipment information on electrical equipment which is used by a resident, a power consumption estimated when a replacement is made with energy-saving equipment, then comparing and displaying it and the power consumption of the electrical equipment owned by the resident. This energy management system includes: an equipment adapter which is provided in electrical equipment such as an air conditioner, a lighting apparatus and a refrigerator, and obtains equipment information such as a power consumption and an operating state; a data center which obtains equipment information on the equipment adapter; an energy-saving equipment database which provides energy-saving equipment data to the data center; and a display unit which displays energy-saving recommended-equipment information created based on the equipment information and the energy-saving equipment data by the data center.

### SUMMARY OF INVENTION

The present invention has been made in view of the above-described problems, and an object of the present invention is to provide an apparatus management device that can easily change an ambient environment of a user to an environment desired by the user, as defined in claim 1.

It is preferable that the apparatus management device further includes: a second operation unit configured to accept an input operation of a control.content with respect to the apparatus reported by the reporting unit; and an apparatus control unit configured to control the apparatus reported by the reporting unit, in accordance with the control content accepted by the second operation unit.

It is preferable that, in the apparatus management device, the second operation unit is configured to accept the input operation of the control content in a range in which the control condition of the apparatus is satisfied.

It is preferable that the apparatus management device further includes a time acquiring unit configured to acquire a current time, the storage unit is configured to store the correspondence relationship for each of predetermined time slots, and the selection unit is configured to select the apparatus that does not satisfy the control condition from the apparatuses that are associated, in the correspondence relationship of the time slot including the current time, with the user request accepted by the first operation unit.

It, is preferable that the apparatus management device further includes a date acquiring unit configured to acquire a current date, the storage unit is configured to store the correspondence relationship for each of predetermined periods, and the selection unit is configured to select the apparatus that does not satisfy the control condition from the apparatuses that are associated, in the correspondence relationship of the period including the current date, with the user request accepted by the first operation unit.

It is preferable that the apparatus management device further includes a setting unit configured to set an energy-saving mode, the storage unit is configured to store, in association with the correspondence relationship, identification information that indicates whether or not the apparatus is controllable when the energy-saving mode is set, and the selection unit is configured to, in a case where the user request is accepted by the first operation unit when the energy-saving mode is set, refer to the identification information and select the apparatus that does not satisfy the control condition from apparatuses that are controllable when the energy-saving mode is set, among the two or more apparatuses.

The apparatus management device according to the present invention selects and reports, if the ambient environment of a user is not an environment desired by the user, the apparatus that does not satisfy the control condition for the apparatus to be in the operating state appropriate for the user request, among the two or more apparatuses. Accordingly, as a result of the user inputting a control content for the reported apparatus, and the apparatus operating in accordance with the control content, the ambient environment of the user can easily be changed to the environment desired by the user, with consideration for only the apparatus that does not satisfy the control condition as the control target.

### BRIEF DESCRIPTION OF DRAWINGS

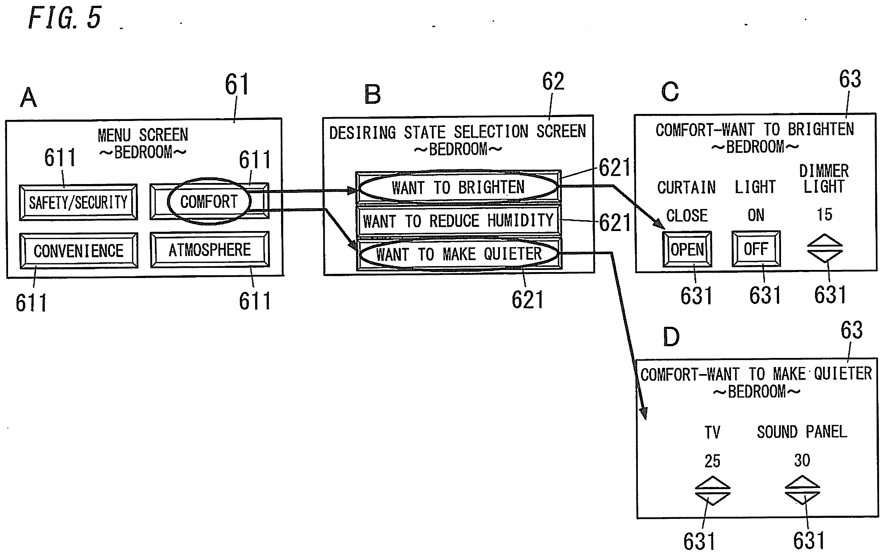

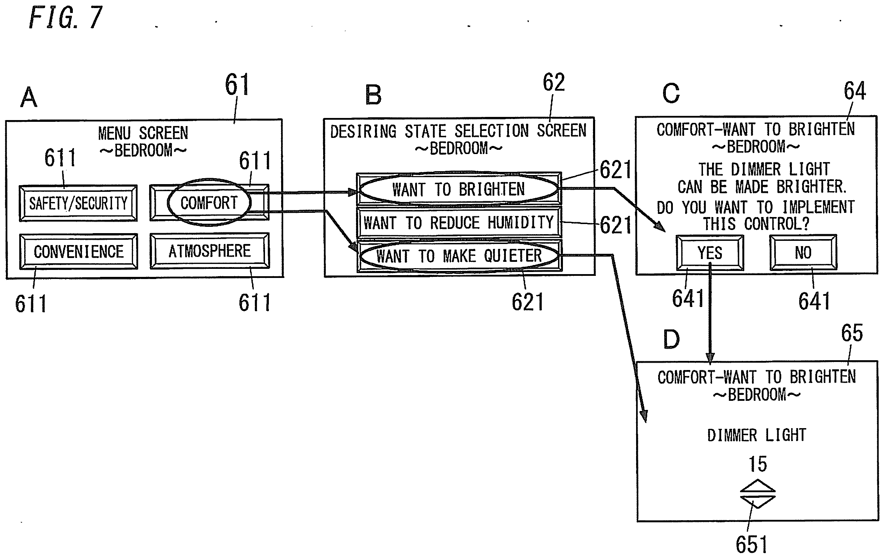

Preferable embodiments according to the present invention will be described, in more detail. Other features and advantages of the present invention will be better understood with reference to the following detailed description and the attached drawings:
FIG. 1 is a block diagram illustrating a configuration of an apparatus management device;
FIG. 2 is a diagram illustrating properties of an apparatus;
FIG. 3 is a diagram illustrating an apparatus table used in the apparatus management device;
FIG. 4 is a diagram illustrating a reference value table used in the apparatus management device;
"A" of FIG. 5 is a diagram illustrating a menu screen on a display screen in an apparatus management device according to a basic mode; "B" of FIG. 5 is a diagram illustrating a desiring state selection screen on the display screen in the apparatus management device according to the basic mode; "C" of FIG. 5 is a diagram illustrating a setting screen when a menu showing "Want to brighten" is selected, on the display screen in the apparatus management device according to the basic mode; and "D" of FIG. 5 is a diagram illustrating a setting screen when a menu showing "Want to make quieter" is selected, on the display screen in the apparatus management device according to the basic mode;

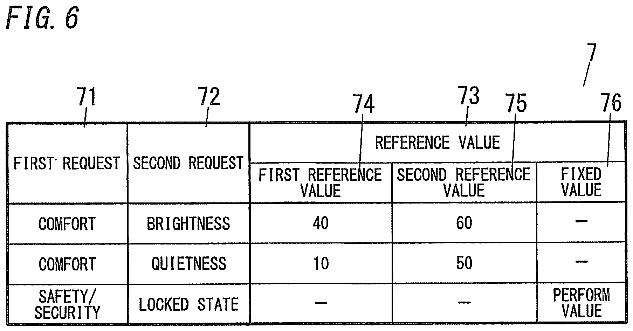

FIG. 6 is a diagram illustrating a correspondence table used in an apparatus management device according to Embodiment 1;
"A" of FIG. 7 is a diagram illustrating a menu screen on a display screen in the apparatus management device according to Embodiment 1; "B" of FIG. 7 is a diagram illustrating a desiring state selection screen on the display screen in the apparatus management device according to Embodiment 1; "C" of FIG. 7 is a diagram illustrating an event notification screen on the display screen in the apparatus management device according to Embodiment 1; and "D" of FIG. 7 is a diagram illustrating a setting screen on the display screen in the apparatus management device according to Embodiment 1;

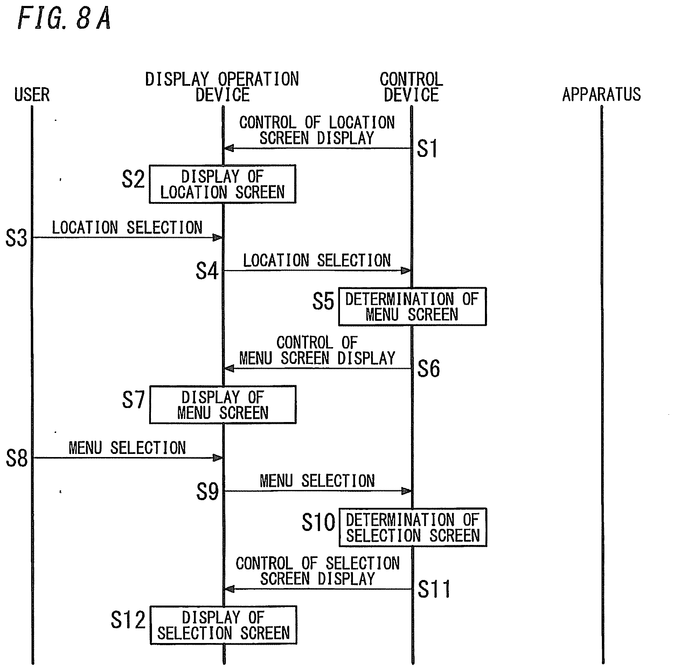

FIG. 8A is a sequence diagram showing steps S1 to S12 of operations of the apparatus management device according to Embodiment 1;

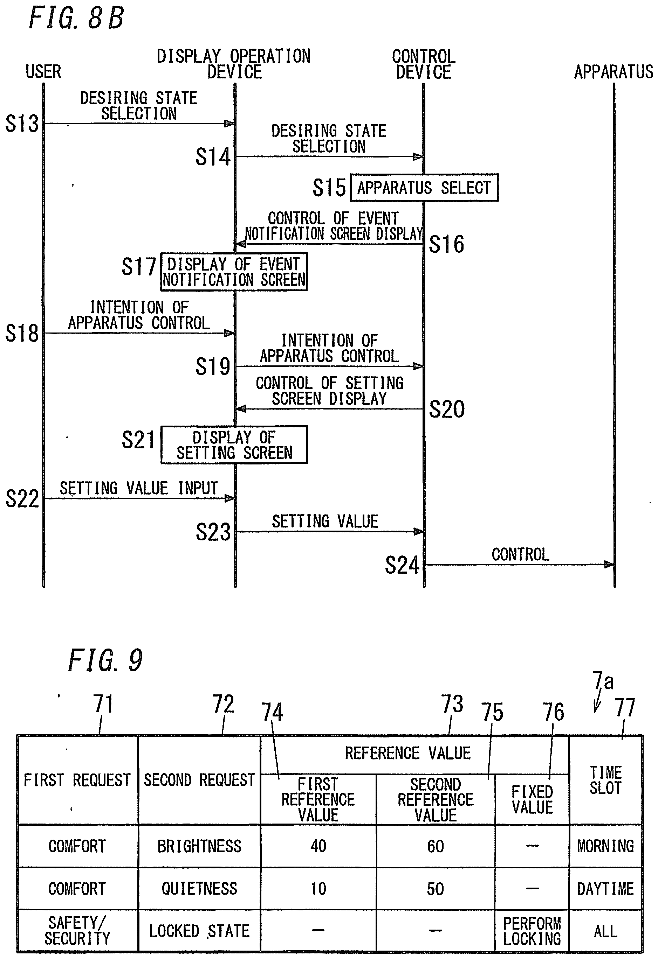

FIG. 8B is a sequence diagram showing steps S13 to S24 of the operations of the apparatus management device according to Embodiment 1;
FIG. 9 is a diagram illustrating a correspondence table used in an apparatus management device according to Embodiment 2;

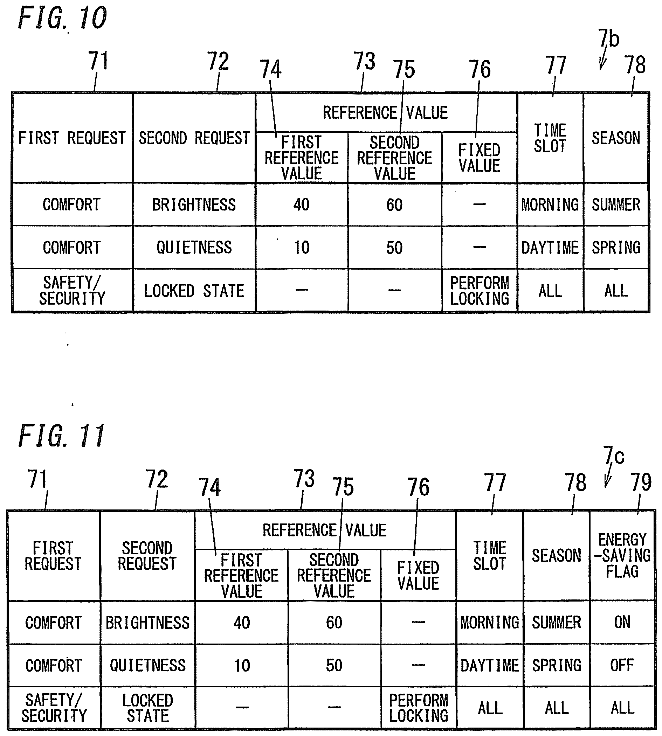

FIG. 10 is a diagram illustrating a correspondence table used in an apparatus management device according to Embodiment 3; and
FIG. 11 is a diagram illustrating a correspondence table used in an apparatus management device according to Embodiment 4.

### DESCRIPTION OF EMBODIMENTS

Apparatus management devices according to embodiments described below are configured to, upon receiving a user request, select and report an-apparatus that does not satisfy a predetermined control condition (described later) from apparatuses that are associated in advance with the user request. That is to say, the apparatus management device according to each embodiment is configured to select and report only an apparatus that does not satisfy a predetermined control condition, instead of reporting all the apparatuses that are associated with the accepted user request. Accordingly, since apparatuses that already satisfy the control condition need not be considered, the ambient environment of the user is easily changed to the environment desired by the user. Hereinafter, a basic mode and Embodiments 1 to 4 will be described with reference to the drawings.

### Basic Mode

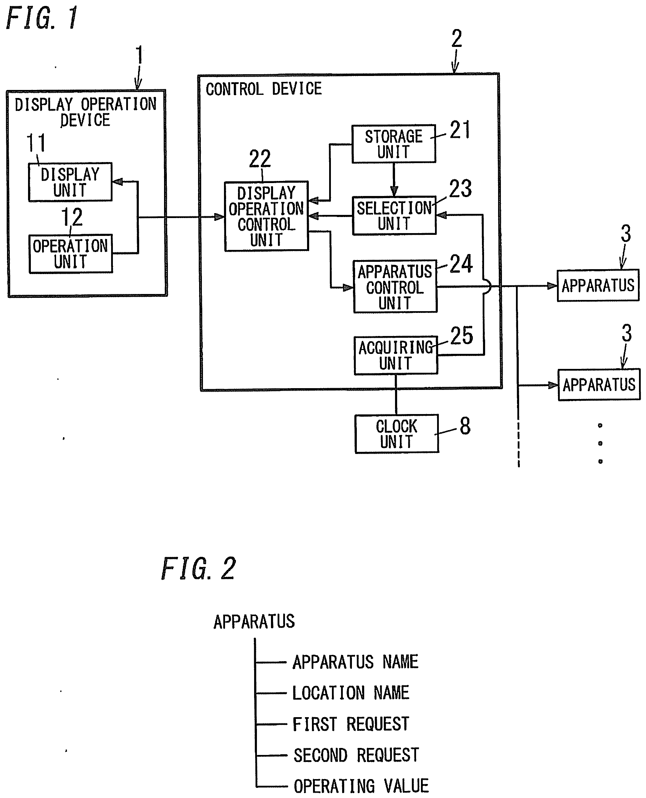

First, a mode that forms a basis for each embodiment will be described. An apparatus management device according to the basic mode includes, as shown in FIG. 1, a display operation device 1 that includes a user interface function and a control device 2 that is configured to control two or more (two, in the diagram) apparatuses 3.

Examples of each apparatus 3 include a lighting apparatus (including a dimmer lighting apparatus), an electric blind, an electric curtain, a television, a video playback apparatus (DVD player, for example), a sound panel, an electric lock, and an air-conditioner. Other examples of each apparatus 3 include an air cleaner, a dehumidifier, a circulator, an IH (Induction Heating) cooker, various sensors (alarm sensor, fire sensor, gas sensor, CO₂ sensor), a Web camera, a massage chair, and a bath (an apparatus for setting a temperature (room temperature) in a bathroom or an apparatus for setting a water temperature in a bathtub). Note that each apparatus 3 is not limited to the above apparatuses, and may be an apparatus other than the apparatuses described above.

Each apparatus 3 is given two or more kinds of properties (attributes) in advance. Specifically, as shown in FIG. 2, each apparatus 3 is individually given an apparatus name, a location name, a first request (first ambient property), a second request (second ambient property), and an operating value (property value). The operating value is a value showing the current operating state of the apparatus 3.

The location name is a name of a place where the apparatus 3 is to be installed. Examples of the place where the apparatus 3 is to be arranged include a bedroom, a living room, a kitchen, a child's room, and a bathroom. Note that the place where the apparatus 3 is to be arranged is not limited to the places described above, and may be a place other than the places described above.

The first request and the second request constitute a user request. The user request is a request with respect to an environment that the user wants to set in a building. The first request is, for example, "safety/security", "comfort", "convenience", "atmosphere", or the like, and represents the user request. The second request is, for example, "brightness", "quietness", "locked state", "humidity", or the like, and represents items that need to be adjusted in order to satisfy the first request. That is to say, the first request is a request that the user ultimately wants to satisfy. On the other hand, the second request is a request that is necessary for satisfying the first request. Note that the user request is not limited to the above items, and a preferable item may be set according to an application, a trend, or the like.

Each of the first requests is associated with second requests. For example, the first request "safety/security" is associated with the second requests "locked state", "alarm state", "monitor surveillance", and the like. The first request "comfort" is associated with the second requests "brightness", "quietness", "temperature", "humidity", and the like. The first request "convenience" is associated with the second requests "coordinated control", and the like. The first request "atmosphere" is associated with the second requests "soothing", "relaxation", "ambience", and the like. Note that the "coordinated control" is to control two or more apparatuses 3 such that the apparatuses 3 are coordinated according to a predetermined program, such as collective control or various scene controls. The various scene controls include going out mode control, sleep mode control, or the like.

Also, the second requests are associated with the apparatuses 3. For example, the second request "locked state" is associated with an electric lock. The second request "alarm state" is associated with an IH cooker, various sensors (alarm sensor, fire sensor, gas sensor, CO₂ sensor), or the like. The second request "monitor surveillance" is associated with a Web camera or the like. The second request "brightness" is associated with a lighting apparatus, an electric blind, an electric curtain, or the like. The second request "quietness" is associated with a television, a video reproducing apparatus, a sound panel, an air cleaner, or the like. The second request "temperature" is associated with an air-conditioner, a circulator, or the like. The second request "humidity" is associated with a dehumidifier, an air cleaner (with dehumidifier function), or the like. The second request "coordinated control" is associated with apparatuses 3 that are controlled in a coordinated manner due to execution of coordinated control application software. The coordinated control application software is application software that is used to control, in a coordinated manner, two or more apparatuses 3 that a user wants to control in a coordinated manner. The second request "soothing" is associated with a massage chair, a bathroom (for changing a set temperature for a bathtub), or the like. The second request "relaxation" is associated with a bathroom (for changing a set temperature for a bathtub), a lighting apparatus, a television, a video reproducing apparatus, a sound panel, or the like. The second request "ambience" is associated with a lighting apparatus, a television, a video reproducing apparatus, a sound panel, or the like.

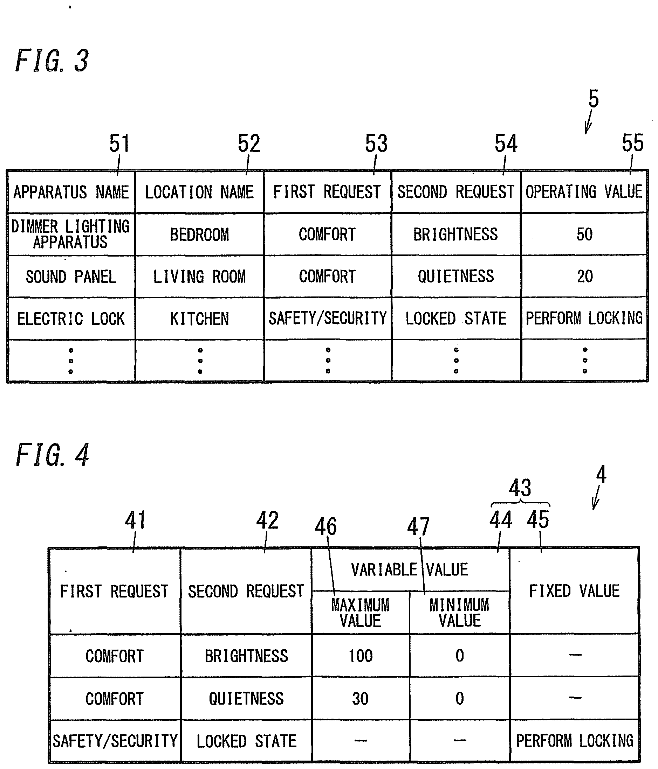

Reference values of the operating values, which are the values that combinations of the first request and the second request can take, are set as shown in FIG. 4. A reference value table 4 shown in FIG. 4 includes a first request item 41 that shows the first request, a second request item 42 that shows the second request, and a reference value item 43 that shows the reference value of the operating value. The reference value item 43 includes a variable value item 44 that shows a range of a variable value, and a fixed value item 45 that shows a fixed value. Furthermore, the variable value item 44 includes a maximum value item 46 that shows a maximum value and a minimum value item 47 that shows a minimum value.

For example, in the case where the maximum value is 100 and the minimum value is 0, the apparatus 3 can take a value in a range from 0 to 100. Note that in the case where the control of the apparatus 3 includes only turning on and turning off, or opening and closing, the operating value of the apparatus 3 takes only two values (0 and 100, for example). In the case where the maximum value is 30 and the minimum value is 0, as another example, the apparatus 3 can take a value in a range from 0 to 30. Note that in the case where the control of the apparatus 3 includes only turning on and turning off, or opening and closing, the operating value of the apparatus 3 takes only two values (0 and 30, for example).

The control device 2 shown in FIG. 1 is a device in which a computer (including a microcomputer) on which a CPU (Central Processing Unit) and a memory, for example, are mounted is a main constituent element. The control device 2 includes a storage unit 21, a display operation control unit 22, a selection unit 23, and an apparatus control unit 24.

The storage unit 21 is configured to store various pieces of information. Specifically, the storage unit 21 is configured to store properties (refer to FIG. 2) of apparatuses 3, a reference value table 4 (refer to FIG. 4), and an apparatus table 5 (refer to FIG. 3) described later.

The apparatus table 5 includes, as shown in FIG. 3, an apparatus item 51 that shows an apparatus name, a location item 52 that shows a location name, a first request item 53 that shows a first request, a second request item 54 that shows a second request, and an operating value item 55 that shows an operating value of an apparatus 3. The name of an apparatus 3 is stored in the apparatus item 51. The name of a location where an apparatus 3 is to be arranged is stored in the location item 52. A first request is stored in the first request item 53. A second request is stored in the second request item 54. A value in a range of the reference value defined in the reference value table 4 is stored in the operating value item 55. For example, a variable value from 0 to 100 or a fixed value such as "locked" may be stored in the operating value item 55. Note that in the case where only turning on or turning off is controlled, or opening or closing is controlled, one of the two values (0 and 100, for example) is stored in the operating value item 55.

Note that the storage unit 21 shown in FIG. 1 is configured to store a program for the control device 2 (computer) to execute various functions, besides properties of the apparatuses 3, the reference value table 4, and the apparatus table 5. That is to say, the storage unit 21 is configured to store a program for causing the control device 2 to function as the storage unit 21, the display operation control unit 22, the selection unit 23, and the apparatus control unit 24.

The display operation control unit 22 includes an acquiring function for acquiring an input content that is inputted to the display operation device 1, and a display control function for causing the display operation device 1 to display various information.

The selection unit 23 is configured to select an apparatus 3 that is associated with the user request (combination of the first request and the second request) that is inputted to the display operation device 1, among the two or more apparatuses 3 in the apparatus table 5.

The apparatus control unit 24 is configured to control the apparatus 3 associated with the user request according to the control content designated by the user.

The display operation device 1 is a portable terminal or the like, for example, and includes a display unit (reporting unit) 11 that is configured to display various information, and an operation unit (first operation unit, second operation unit) 12 that is configured to accept an input operation of the user. The display unit 11 is a liquid crystal display or an organic EL (Electro Luminescence) display, for example. The operation unit 12 is a touch panel or two or more buttons, for example. Hereinafter, the case where the operation unit 12 is a touch panel will be described.

The display unit 11 is configured to display a location screen (not shown), a menu screen 61 (refer to "A" of FIG. 5), a desiring state selection screen 62 (refer to "B" of FIG. 5), or a setting screen 63 (refer to "C" and "D" of FIG. 5), in accordance with the instruction of the display operation control unit 22.

The menu screen 61 shown in "A" of FIG. 5 is formed for each of locations such as a bedroom and a living room, for example. For example, on a menu screen 61 corresponding to a bedroom, two or more buttons 611 corresponding to the first requests of "safety/security", "comfort", "convenience", and "atmosphere" are displayed.

The desiring state selection screens 62 (one of which is shown in "B" of FIG. 5) corresponds respectively to the buttons 611 on the menu screen 61. That is to say, the desiring state selection screen 62 corresponds to the first request. For example, buttons 621 of "Want to brighten", "Want to reduce humidity", and "Want to make quieter" are displayed on the desiring state selection screen 62 that corresponds to the first request "comfort". "Want to brighten" corresponds to the second request "brightness". "Want to reduce humidity" corresponds to the second request "humidity". "Want to make quieter" corresponds to the second request "quietness". Also, a button (not shown) showing "Perform locking" is displayed on the desiring state selection screen that corresponds to "safety/security". "Perform locking" corresponds to the second request "locked state".

Setting screens 63 shown in "C" and "D" of FIG. 5 are screens that correspond to respective combinations of a button 611 selected in the menu screen 61 and a button 621 selected on the desiring state selection screen 62. That is to say, the setting screen 63 displays an apparatus 3 that is associated with the combination of a first request selected in the menu screen 61 and a second request selected in the desiring state selection screen 62. On the setting screen 63, a button 631 for changing the operation of the apparatus 3 is displayed for each apparatus 3.

Next, operations of the apparatus management device according to the basic mode will be described with reference to FIG. 1. First, the display operation control unit 22 of the control device 2 is configured to control the display operation device 1 such that the location screen (not shown) is displayed. The display unit 11 of the display operation device 1 is configured to display the location screen (not shown) in accordance with an instruction of the display operation control unit 22. Thereafter, the operation unit 12 accepts an input operation regarding a location selection by a user who viewed the location screen.

The display operation control unit 22 is configured to, upon acquiring the input content regarding the location selection by the user, control the display operation device 1 such that the menu screen 61 (refer to "A" of FIG. 5) that corresponds to the input content is displayed. The display unit 11 is configured to display the menu screen 61 in accordance with the instruction of the display operation control unit 22. Thereafter, the operation unit 12 is configured to accept an input operation regarding the first request (menu selection) by the user who viewed the menu screen 61.

The display operation control unit 22 is configured to, upon acquiring the input content regarding the menu selection by the user, control the display operation device 1 such that the desiring state selection screen 62 (refer to "B" of FIG. 5) that corresponds to the input content is displayed. The display unit 11 is configured to display the desiring state selection screen 62 in accordance with the instruction of the display operation control unit 22. Thereafter, the operation unit 12 is configured to accept an input operation regarding the second request (desiring state selection) by the user who viewed the desiring state selection screen 62.

When the display operation control unit 22 accepts the input content on the desiring state selection screen 62 inputted by the user, the selection unit 23 selects an apparatus 3 that is associated, in the apparatus table 5 stored in the storage unit 21, with the user request that has been accepted by the operation unit 12, among the two or more apparatuses 3.

The display operation control unit 22 is configured to control the display operation device 1 such that the apparatus 3 selected by the selection unit 23 is displayed. The display unit 11 is configured to display the apparatus 3 selected by the selection unit 23 in accordance with the instruction of the display operation control unit 22 (refer to "C" and "D" of FIG. 5).

Thereafter, the operation unit 12 is configured to accept an input operation of the control content regarding the apparatus 3 displayed in the display unit 11 of the display operation device 1 within the range of the variable value with respect to the apparatus 3. When the display operation control unit 22 acquires the control content, the apparatus control unit 24 controls the apparatus 3 displayed in the display unit 11 in accordance with the control content accepted by the operation unit 12.

For example, if the user selects "Comfort" in the menu screen 61, and selects "Want to brighten" in the desiring state selection screen 62 after screen transition, the setting screen 63 displays apparatuses 3 that are associated with the first request "comfort" and the second request "brightness", as shown in "C" of FIG. 5. Also, if the user selects "Comfort" in the menu screen 61, and selects "Want to make quieter" in the desiring state selection screen 62 after screen transition, the setting screen 63 displays apparatuses 3 that are associated with the first request "comfort" and the second request "quietness", as shown in "D" of FIG. 5. Here, the operating values of the apparatuses 3 displayed on the setting screen 63 take the operating values stored in the apparatus table 5 shown in FIG. 3. Then, the user can designate an apparatus 3 on the setting screen 63 and change the operation of the apparatus 3.

The apparatus management device according to the basic mode described above can select, report, and furthermore control all the apparatuses 3 that are associated with the user request (combination of the first request and the second request) among the two or more apparatuses 3.

Incidentally, the apparatus management device according to the basic mode displays all the apparatuses 3 that are associated with the user request, and therefore the apparatus management device cannot select and display an apparatus 3 that does not satisfy the user request from the apparatuses 3 that are associated with the user request. Accordingly, in each of Embodiments 1 to 4 described below, an apparatus management device that is configured to select and display the apparatus 3 that does not satisfy the user request, from the apparatuses 3 that are associated with the user request, will be described.

### Embodiment 1

Unlike the apparatus management device according to the basic mode, an apparatus management device according to Embodiment 1 is configured to select and display an apparatus 3 that does not satisfy a user request, from apparatuses 3 that are associated with the user request. Hereinafter, the apparatus management device according to the present embodiment will be described. Note that constituent elements similar to those in the apparatus management device according to the basic mode are provided with the same reference numerals, and description thereof will be omitted.

A control device 2 according to the present embodiment includes, as shown in FIG. 1, a storage unit 21, a display operation control unit 22, a selection unit 23, and an apparatus control unit 24, similarly to the control device 2 according to the basic mode.

The storage unit 21 according to the present embodiment is configured to store a correspondence table 7 shown in FIG. 6. The correspondence table 7 is a table that shows a correspondence relationship between user requests (combinations of a first request and a second request) and predetermined control conditions. The correspondence relationship between the user requests and the apparatuses 3 is shown in the apparatus table 5 (refer to FIG. 3). The predetermined control condition is a condition for an apparatus 3 to be in an operating state that is appropriate for the user request. That is to say, the control condition is a condition that defines a range of operating values of an apparatus 3 when the apparatus 3 operates so as to satisfy the user request.

The correspondence table 7 includes a first request item 71, a second request item 72, and a reference value item 73 that shows reference values with respect to the second request item 72, as shown in FIG. 6. The reference value item 73 includes a first reference value item 74 that shows a first reference value, a second reference value item 75 that shows a second reference value, and a third reference value item 76 that shows a fixed value. The first reference value is a value that is used when it is desired to increase a predetermined physical quantity from the current value. On the other hand, the second reference value is a value that is used when it is desired to decrease a predetermined physical quantity from the current value. In the case of lighting, for example, the first reference value is a value that is used when it is desired to increase brightness. On the other hand, the second reference value is, in the case of lighting, for example, a value that is used when it is desired to decrease brightness. Also, in the case of sound volume, for example, the first reference value is a value that is used when it is desired to increase the sound volume. On the other hand, the second reference value is a value that is used when it is desired to decrease the sound volume.

In the case where the second request is to increase a predetermined physical quantity, the control condition is that the operating value of an apparatus 3 is larger than the first reference value in the first reference value item 74. In the case where the second request is to increase "brightness", for example, an apparatus 3 can be said to satisfy the control condition if the operating value of the apparatus 3 is larger than the first reference value in the first reference value item 74. On the other hand, an apparatus 3 can be said to not satisfy the control condition if the operating value of the apparatus 3 is the first reference value or less in the first reference value item 74.

In the case where the second request is to decrease a predetermined physical quantity, the control condition is that the operating value of an apparatus 3 is less than the second reference value in the second reference value item 75. In the case where the second request is to decrease "brightness", for example, an apparatus 3 can be said to satisfy the control condition if the operating value of the apparatus 3 is less than the second reference value in the second reference value item 75. On the other hand, an apparatus 3 can be said to not satisfy the control condition if the operating value of the apparatus 3 is the second reference value or more in the second reference value item 75.

The selection unit 23 according to the present embodiment is configured to select an apparatus 3 that does not satisfy the control condition, with reference to the correspondence table 7, from the apparatuses 3 that are associated with the user request.

In the display operation device 1 according to the present embodiment, the display unit 11 is configured to display a location screen (not shown), a menu screen 61 (refer to "A" of FIG. 7), a desiring state selection screen 62 (refer to "B" of FIG. 7), an event notification screen 64 (refer to "C" of FIG. 7), and a setting screen 65 (refer to "D" of FIG. 7).

The menu screen 61 shown in "A" of FIG. 7 is formed for each location such as a bedroom or a living room. For example, two or more buttons 611 that correspond to the first requests of "safety/security", "comfort", "convenience", and "atmosphere" are displayed on the menu screen 61 corresponding to a bedroom.

The desiring state selection screens 62 (one of which is shown in "B" of FIG. 7) correspond respectively to the buttons 611 on the menu screen 61. That is to say, the desiring state selection screen 62 corresponds to the first request. For example, buttons 621 "Want to brighten", "Want to reduce humidity", and "Want to make quieter" are displayed on the desiring state selection screen 62 that corresponds to "comfort". "Want to brighten" corresponds to the second request "brightness". "Want to reduce humidity" corresponds to the second request "humidity". "Want to make quieter" corresponds to the second request "quietness". Also, a button (not shown) "Perform locking" is displayed on the desiring state selection screen 62 that corresponds to "safety/security". "Perform locking" corresponds to the second request "locked state".

The event notification screen 64 shown in "C" of FIG. 7 is a screen that corresponds to the combination of a button 611 selected on the menu screen 61 and a button 621 selected on the desiring state selection screen 62. That is to say, the event notification screen 64 is configured to display an apparatus 3 that does not satisfy the control condition, from the apparatuses 3 that are associated with the combination of a first request selected on the menu screen 61 and a second request selected on the desiring state selection screen 62. A button 641 for selecting whether or not to change the operation of an apparatus 3 is displayed on the event notification screen 64.

The setting screen 65 shown in "D" of FIG. 7 is for accepting an input of a control content by a user. A button 651 for changing the operation of an apparatus 3 that does not satisfy the control condition is displayed on the setting screen 65.

Next, operations of the apparatus management device according to the present embodiment will be described with reference to FIGS. 8A and 8B. First, the display operation control unit 22 of the control device 2 controls the display operation device 1 such that a location screen (not shown) is displayed (S1). The display unit 11 of the display operation device 1 displays the location screen in accordance with the instruction of the display operation control unit 22 (S2). Thereafter, the operation unit 12 accepts an input operation with respect to the location selection by a user who viewed the location screen (S3).

The display operation control unit 22, upon acquiring the input content with respect to the location selection by the user (S4), determines the menu screen 61 (refer to "A" of FIG. 7) that corresponds to the input content (S5), and controls the display operation device 1 such that the determined menu screen 61 is displayed (S6). The display unit 11 displays the menu screen 61 in accordance with the instruction of the display operation control unit 22 (S7). Thereafter, the operation unit 12 accepts an input operation with respect to the first request (menu selection) by the user who viewed the menu screen 61 (S8).

The display operation control unit 22, upon acquiring the input content with respect to the menu selection by the user (S9), determines the desiring state selection screen 62 (refer to "B" of FIG. 7) corresponding to the input content (S10), and controls the display operation device 1 such that the determined desiring state selection screen 62 is displayed (S11). The display unit 11 displays the desiring state selection screen 62 in accordance with the instruction of the display operation control unit 22 (S12). Thereafter, the user performs an operation, and the operation unit 12 accepts an input operation with respect to the second request (desiring state selection) by the user who viewed the desiring state selection screen 62 (S13).

When the display operation control unit 22 accepts the input content on the desiring state selection screen 62 by the user (S14), the selection unit 23 selects an apparatus 3, with reference to the correspondence table 7 (refer to FIG. 6) stored in the storage unit 21, that does not satisfy the control condition from the apparatuses 3 that are associated with the second request accepted by the operation unit 12 (S15).

The display operation control unit 22 controls the display operation device 1 such that the apparatus 3 selected by the selection unit 23 is displayed on the event notification screen 64 (refer to "C" of FIG. 7) (S16). The display unit 11 displays the apparatus 3 selected by the selection unit 23 on the event notification screen 64 in accordance with the instruction of the display operation control unit 22 (S17). Thereafter, the operation unit 12 accepts an indication of intention by the user as to whether or not to control the apparatus (S18).

The display operation control unit 22, upon receiving the indication of intention by the user to control the apparatus (S19), controls the display operation device 1 such that the setting screen 65 (refer to "D" of FIG. 7) is displayed (S20). The display unit 11 displays the setting screen 65 in accordance with the instruction of the display operation control unit 22 (S21). Thereafter, the operation unit 12 accepts an input operation of the control content (setting value) with respect to the apparatus 3 displayed in the display unit 11 in a range in which the control condition of the apparatus 3 is satisfied (S22). When the display operation control unit 22 acquires the control content (S23), the apparatus control unit 24 controls the apparatus 3 displayed on the display unit 11 in accordance with the control content accepted by the operation unit 12 (S24).

For example, when a user selects "Comfort" on the menu screen 61, and selects "Want to brighten" on the desiring state selection screen 62 after screen transition, the control device 2 searches for an apparatus 3 that is associated with the second request of "brightness" and has operating value of "40" or less. If an apparatus 3 that satisfies the above condition exists, the control device 2 selects the apparatus 3. The display operation device 1 displays the apparatus 3 selected by the control device 2 on the event notification screen 64. If the user selects "Yes" on the event notification screen 64, the screen transitions to the setting screen 65 of the apparatus 3, which is the target of the event notification, and the operation of the apparatus 3 can be changed. Accordingly, a subjective judgment by the user can be sought.

Another example is as follows. When a user selects "Comfort" on the menu screen 61, and selects "Want to make quieter" on the desiring state selection screen 62 after screen transition, the control device 2 searches an apparatus 3 that is associated with the second request "quietness" and has an operating value of "50" or more. If an apparatus 3 that satisfies the above condition exists, the control device 2 selects the apparatus 3. The display operation device 1 displays the apparatus 3 selected by the control device 2 on the event notification screen 64. The screen transitions to the setting screen 65 of the apparatus 3, which is the target of the event notification, according to the operation by the user on the event notification screen 64, and the user can change the operation of the apparatus 3.

The apparatus management device according to the present embodiment described above is an apparatus management device that is configured to control two or more apparatuses 3. The apparatus management device includes the storage unit 21, the first operation unit (operation unit 12), the selection unit 23, and the reporting unit (display unit 11). The storage unit 21 is configured to store, for each of the two or more apparatuses 3, a correspondence relationship between a user request, the apparatus 3, and a control condition for the apparatus 3 to be in an operating state appropriate for the user request. The first operation unit is configured to accept an input operation of the user request. The selection unit 23 is configured to select an apparatus 3 that does not satisfy the control condition from the apparatuses 3 that are associated, in the correspondence relationship stored in the storage unit 21, with the user request accepted by the first operation unit among the two or more apparatuses 3. The reporting unit is configured to report the apparatus 3 selected by the selection unit 23.

If the ambient environment of a user is not an environment desired by the user, the apparatus management device according to the present embodiment selects and reports an apparatus 3 that does not satisfy the control condition for the apparatus 3 to be in the operating state appropriate for the user request, among two or more apparatuses 3. Accordingly, as a result of the user inputting a control content for the reported apparatus 3, and the apparatus 3 operating in accordance with the control content, the ambient environment of the user can easily be changed to the environment desired by the user, with consideration for only the apparatus 3 that does not satisfy the control condition as the control target.

Also, as in the apparatus management device according to the present embodiment, it is preferable that the apparatus management device further includes the second operation unit (operation unit 12) and the apparatus control unit 24. The second operation unit is configured to accept an input operation of the control content with respect to the apparatus 3 reported by the reporting unit (display unit 11). The apparatus control unit 24 is configured to control the apparatus 3 reported by the reporting unit in accordance with the control content accepted by the second operation unit.

The apparatus management device according to the present embodiment can control the apparatus 3 with consideration for a subjective judgment by a user, instead of automatically controlling the apparatus 3 in a state in which the user is not aware of the control content.

Note that, in the apparatus management device, the screen transition may be limited to transition up to the event notification screen 64 (refer to "C" of FIG. 7). That is to say, the apparatus management device may not have a function for displaying the setting screen 65 (refer to "D" of FIG. 7). Even in this case, it is possible to indicate only the apparatus 3 that does not satisfy the control condition (condition for the apparatus 3 to be in the operating state appropriate for the user request) to the user.

### Embodiment 2

An apparatus management device according to Embodiment 2 differs from the apparatus management device according to Embodiment 1 in that a correspondence relationship between a user request, an apparatus 3, and a control condition differs for each of time slots. Note that constituent elements similar to those in the apparatus management device according to Embodiment 1 are provided with the same reference numerals, and description thereof will be omitted.

A storage unit 21 according to the present embodiment is configured to store a correspondence table 7a that shows a correspondence relationship that is different for each of predetermined time slots, as shown in FIG. 9. Note that description of functions similar to those of the storage unit 21 according to Embodiment 1 will be omitted.

The correspondence table 7a according to the present embodiment further includes a time slot item 77 that shows a time slot, as shown in FIG. 9. Time slots such as "morning", "daytime", and "evening", are stored in the time slot item 77. Note that the time slot may not be set depending on the user request (combination of a first request and a second request). In the case where the user request does not relate to the time slot, "ALL" representing all the time slots is stored in the time slot item 77. Note that description of functions similar to those of the correspondence table 7 (refer to FIG. 6) according to Embodiment 1 will be omitted.

Also, the control device 2 according to the present embodiment further includes an acquiring unit 25 that is configured to acquire a current time and a current date, as shown in FIG. 1. The acquiring unit 25 is configured to acquire the current time from a clock unit 8. The clock unit 8 is a real time clock (RTC) or the like.

The selection unit 23 according to the present embodiment is configured to select an apparatus 3 that does not satisfy the control condition from the apparatuses 3 that are associated, in the correspondence relationship of a time slot including the current time, with the user request accepted by an operation unit 12. That is to say, the selection unit 23 is configured to select an apparatus 3 that does not satisfy the control condition from the apparatuses 3 for which the time slot including the current time is set in the time slot item 77. Note that description of functions similar to those of the selection unit 23 according to Embodiment 1 will be omitted.

An operation unit 12 according to the present embodiment is configured to accept an input operation of the control content, in a range in which the control condition is satisfied, for the apparatus 3 selected by the selection unit 23, that is, the apparatus 3 that does not satisfy the control condition in the correspondence relationship of the time slot including the current time. Note that description of functions similar to those of the operation unit 12 according to Embodiment 1 will be omitted.

As in the apparatus management device according to the present embodiment, as described above, the apparatus management device preferably further includes a time acquiring unit (acquiring unit 25). The time acquiring unit is configured to acquire the current time. In this case, the storage unit 21 is configured to store the correspondence relationship for each predetermined time slot. The selection unit 23 is configured to select an apparatus 3 that does not satisfy the control condition from the apparatuses 3 that are associated, in the correspondence relationship of the time slot including the current time, with the user request accepted by the first operation unit (operation unit 12).

The apparatus management device according to the present embodiment can perform apparatus notification (event notification) and apparatus control according to the time slot, even when the environment desired by the user differs for each time slot.

Note that the operations of the apparatus management device according, to the present embodiment are similar to the operations of the apparatus management device according to Embodiment 1, except that the time slot is considered.

### Embodiment 3

An apparatus management device according to Embodiment 3 differs from the apparatus management device according to Embodiment 2 in that a correspondence relationship between a user request, an apparatus 3, and a control condition differs for each of seasons. Note that constituent elements similar to those in the apparatus management device according to Embodiment 2 are provided with the same reference numerals, and description thereof will be omitted.

A storage unit 21 according to the present embodiment is configured to store a correspondence table 7b that shows a correspondence relationship that is different for each of predetermined seasons (periods), as shown in FIG. 10. Note that description of functions similar to those of the storage unit 21 according to Embodiment 2 will be omitted.

The correspondence table 7b according to the present embodiment further includes a season item 78 that shows a season, as shown in FIG. 10. Seasons such as "spring", "summer", "autumn", and "winter" are stored in the season item 78. Note that the season may not be set depending on a user request (combination of a first request and a second request). In the case where the user request does not relate to the season, "ALL" representing all the seasons is stored in the season item 78. Note that description of functions similar to those of the correspondence table 7a (refer to FIG. 9) according to Embodiment 2 will be omitted.

A selection unit 23 according to the present embodiment is configured to select an apparatus 3 that does not satisfy the control condition from the apparatuses 3 that are associated, in the correspondence relationship of a season (period) including the current date, with the user request accepted by an operation unit 12. That is to say, the selection unit 23 is configured to select an apparatus 3 that does not satisfy the control condition from the apparatuses 3 for which the season including the current date in the season item 78 is set. Note that description of functions similar to those of the selection unit 23 according to Embodiment 2 will be omitted.

An operation unit 12 according to the present embodiment is configured to accept an input operation of the control content, in a range in which the control condition is satisfied, for the apparatus 3 selected by the selection unit 23, that is, the apparatus 3 that does not satisfy the control condition in the correspondence relationship of the season including the current date. Note that description of functions similar to those of the operation unit 12 according to Embodiment 2 will be omitted.

As in the apparatus management device according to the present embodiment, as described above, the apparatus management device preferably further includes a date acquiring unit (acquiring unit 25). The date acquiring unit is configured to acquire the current date. In this case, the storage unit 21 is configured to store the correspondence relationship for each predetermined period. The selection unit 23 is configured to select the apparatus 3 that does not satisfy the control condition from the apparatuses 3 that are associated, in the correspondence relationship of the period including the current date, with the user request accepted by the first operation unit (operation unit 12).

The apparatus management device according to the present embodiment can perform apparatus notification (event notification) and apparatus control according to the season, even when the environment desired by the user differs for each season (period).

Note that the operations of the apparatus management device according to the present embodiment are similar to the operations of the apparatus management device according to Embodiment 2, except that the season (period) is considered.

Also, although the apparatus management device according to the present embodiment uses both the time slot and the season, only the season may be used.

### Embodiment 4

An apparatus management device according to Embodiment 4 differs from the apparatus management device according to Embodiment 3 in that the apparatus management device according to Embodiment 4 includes an energy-saving mode. Note that constituent elements similar to those in the apparatus management device according to Embodiment 3 are provided with the same reference numerals, and description thereof will be omitted.

The apparatus control unit 24 according to the present embodiment includes a function serving as a setting unit for setting the energy-saving mode. That is, the apparatus control unit 24 according to the present embodiment includes, other than apparatus control in a normal mode described in Embodiments 1 to 3, a function for performing apparatus control in the energy-saving mode in which the electric power consumption of an apparatus 3 can be reduced compared with the apparatus control in the normal mode.

A storage unit 21 according to the present embodiment is configured to store a correspondence table 7c, in which an energy-saving flag (identification information) that indicates whether or not the apparatus 3 is controllable when the energy-saving mode is set is associated with the apparatus 3. Note that description of functions similar to those of the storage unit 21 according to Embodiment 3 will be omitted.

The correspondence table 7c according to the present embodiment further includes an energy-saving flag item 79 that shows the energy-saving flag, as shown in FIG. 11. The energy-saving flag, which is "ON" or "OFF", is stored in the energy-saving flag item 79. Note that, if the apparatus 3 is not dependent on the energy-saving mode, "ALL" is stored in the energy-saving flag item 79. Also, the energy-saving flag may be changed during operation.

A selection unit 23 according to the present embodiment is configured to refer to the energy-saving flag in the correspondence table 7c in the case where a user request is accepted by the operation unit 12 when the energy-saving mode is set in the apparatus control unit 24. Thereafter, the selection unit 23 is configured to select an apparatus 3 that does not satisfy the control condition from the apparatuses 3 that are controllable when the energy-saving mode is set. That is to say, in the case where the energy-saving mode is set, an apparatus 3 that does not satisfy the control condition among the apparatuses 3 having energy-saving flag of "ON" is the target of an event notification. Note that description of functions similar to those of the selection unit 23 according to Embodiment 3 will be omitted.

As in the apparatus management device according to the present embodiment, as described above, the apparatus management device preferably further includes the setting unit (apparatus control unit 24). The setting unit is configured to set the energy-saving mode. In this case, the storage unit 21 stores, in association with the correspondence relationship, identification information that indicates whether or not the apparatus 3 is controllable when the energy-saving mode is set. In the case where a user request is accepted by the first operation unit (operation unit 12) when the energy-saving mode is set, the selection unit 23 is configured to refer to the identification information and select the apparatus 3 that does not satisfy the control condition from apparatuses 3 that are controllable when the energy-saving mode is set, among the two or more apparatuses 3.

In the case where the user wants, in advance, to control an apparatus 3 to realize energy saving, the apparatus management device according to the present embodiment can perform apparatus notification (event notification) and apparatus control based on energy saving.

Note that the operations of the apparatus management device according to the present embodiment are similar to the operations of the apparatus management device according to Embodiment 3, except that the energy-saving mode is considered.

Although the apparatus management device according to the present embodiment uses both the time slot and the season, only the time slot may be used, or only the season may be used.

Also, in each embodiment, the display operation device 1 and the control device 2 may be separately provided, or may be integrally provided.

Although, in each embodiment, the display unit 11 is used as the reporting unit, a sound output unit may be used as the reporting unit. The sound output unit includes a speaker, or the like. The sound output unit can notify an apparatus 3 selected by the selection unit 23 by sound. Note that the display unit 11 and the sound output unit may be used in combination as the reporting unit.

Although the present invention has been described with reference to a certain preferred embodiment, numerous modifications and variations can be made by those skilled in the art without departing from the true spirit and scope of this invention, namely claims.

## Claims

1. An apparatus management device configured to manage two or more apparatuses (3), comprising:
a storage unit (21) configured to store, for each of the two or more apparatuses (3), a correspondence relationship between a user request, an apparatus (3), and a control condition for the apparatus (3) to be in an operating state appropriate for the user request;
a first operation unit configured to accept an input operation of the user request;
a selection unit (23) configured to select an apparatus (3) that does not satisfy the control condition from apparatuses (3) that are associated, in the correspondence relationship stored in the storage unit, with the user request accepted by the first operation unit, among the two or more apparatuses (3); and
a reporting unit configured to report the apparatus (3) that is selected by the selection unit (23).

2. The apparatus management device according to claim 1, further comprising:
a second operation unit configured to accept an input operation of a control content with respect to the apparatus (3) reported by the reporting unit; and
an apparatus control unit (24) configured to control the apparatus (3) reported by the reporting unit, in accordance with the control content accepted by the second operation unit.

3. The apparatus management device according to claim 2, wherein the second operation unit is configured to accept the input operation of the control content in a range in which the control condition of the apparatus is satisfied.

4. The apparatus management device according to any one of claims 1 to 3, further comprising:
a time acquiring unit configured to acquire a current time,
wherein the storage unit (21) is configured to store the correspondence relationship for each of predetermined time slots, and
wherein the selection unit (23) is configured to select the apparatus (3) that does not satisfy the control condition from the apparatuses (3) that are associated, in the correspondence relationship of a time slot including the current time, with the user request accepted by the first operation unit.

5. The apparatus management device according to any one of claims 1 to 4, further comprising:
a date acquiring unit configured to acquire a current date,
wherein the storage unit (21) is configured to store the correspondence relationship for each of predetermined seasons, and
wherein the selection unit (23) is configured to select the apparatus (3) that does not satisfy the control condition from the apparatuses (3) that are associated, in the correspondence relationship of a season including the current date, with the user request accepted by the first operation unit.

6. The apparatus management device according to any one of claims 1 to 5, further comprising:
a setting unit configured to set an energy-saving mode,
wherein the storage unit (21) is configured to store, in association with the correspondence relationship, identification information that indicates whether or not the apparatus (3) is controllable when the energy-saving mode is set, and
wherein the selection unit (23) is configured to, in a case where the user request is accepted by the first operation unit when the energy-saving mode is set, refer to the identification information and select the apparatus (3) that does not satisfy the control condition from apparatuses (3) that are controllable when the energy-saving mode is set, among the two or more apparatuses (3).

## Patentansprüche

1. Geräteverwaltungsvorrichtung, die dazu eingerichtet ist, zwei oder mehrere Gerät (3) zu verwalten, aufweisend:
eine Speichereinheit (21), die dazu eingerichtet ist, für jedes der zwei oder der mehreren Geräte (3) eine Entsprechungsbeziehung zwischen einer Benutzeranforderung, einem Gerät (3) und einer Steuerungsbedingung für das Gerät (3), sich in einem Betriebszustand zu befinden, der für die Benutzeranforderung geeignet ist, zu speichern;
eine erste Betriebseinheit, die dazu eingerichtet ist, einen Eingabevorgang der Benutzeranforderung zu akzeptieren;
eine Auswähleinheit (23), die dazu eingerichtet ist, unter den zwei oder den mehreren Geräten (3) ein Gerät (3), das der Steuerungsbedingung nicht genügt, von Geräten (3) auszuwählen, die in der Entsprechungsbeziehung, die in der Speichereinheit gespeichert ist, der Benutzeranforderung, die durch die erste Betriebseinheit akzeptiert ist, zugeordnet sind; und
eine Meldeeinheit, die dazu eingerichtet ist, das Gerät (3) zu melden, das durch die Auswähleinheit (23) ausgewählt ist.

2. Geräteverwaltungsvorrichtung nach Anspruch 1, ferner aufweisend:
eine zweite Betriebseinheit, die dazu eingerichtet ist, einen Eingabevorgang eines Steuerungsinhalts in Bezug auf das Gerät (3) zu akzeptieren, das durch die Meldeeinheit gemeldet ist; und
eine Gerätesteuerungseinheit (24), die dazu eingerichtet ist, das Gerät (3), das durch die Meldeeinheit gemeldet ist, gemäß dem Steuerungsinhalt zu steuern, der durch die zweite Betriebseinheit akzeptiert ist.

3. Geräteverwaltungsvorrichtung nach Anspruch 2, wobei die zweite Betriebseinheit dazu eingerichtet ist, den Eingabevorgang des Steuerungsinhalts in einem Bereich zu akzeptieren, in dem die Steuerungsbedingung des Geräts erfüllt ist.

4. Geräteverwaltungsvorrichtung nach einem beliebigen der Ansprüche 1 bis 3, ferner aufweisend:
eine Zeitakquirierungseinheit, die dazu eingerichtet ist, eine aktuelle Zeit zu akquirieren,
wobei die Speichereinheit (21) dazu eingerichtet ist, die Entsprechungsbeziehung für jeden vorbestimmten Zeitschlitz zu speichern, und
wobei die Auswähleinheit (23) dazu eingerichtet ist, das Gerät (3), das der Steuerungsbedingung nicht genügt, von den Geräten (3) auszuwählen, die in der Entsprechungsbeziehung eines Zeitschlitzes, der die aktuelle Zeit einschließt, der Benutzeranforderung, die durch die erste Betriebseinheit akzeptiert ist, zugeordnet sind.

5. Geräteverwaltungsvorrichtung nach einem beliebigen der Ansprüche 1 bis 4, ferner aufweisend:
eine Datumsakquirierungseinheit, die dazu eingerichtet ist, ein aktuelles Datum zu akquirieren,
wobei die Speichereinheit (21) dazu eingerichtet ist, die Entsprechungsbeziehung für jede von vorbestimmten Jahreszeiten zu speichern, und
wobei die Auswähleinheit (23) dazu eingerichtet ist, das Gerät (3), das der Steuerungsbedingung nicht genügt, von den Geräten (3) auszuwählen, die in der Entsprechungsbeziehung einer Jahreszeit, die das aktuelle Datum einschließt, der Benutzeranforderung, die durch die erste Betriebseinheit akzeptiert ist, zugeordnet sind.

6. Geräteverwaltungsvorrichtung nach einem beliebigen der Ansprüche 1 bis 5, ferner aufweisend:
eine Einstelleinheit, die dazu eingerichtet ist, einen Energiesparmodus einzustellen,
wobei die Speichereinheit (21) dazu eingerichtet ist, Identifikationsinformationen, die angeben, ob das Gerät (3) sich steuern lässt, wenn der Energiesparmodus eingestellt ist, oder ob nicht, gemeinsam mit der Entsprechungsbeziehung zu speichern, und
wobei die Auswähleinheit (23) dazu eingerichtet ist, in einem Fall, in dem die Benutzeranforderung durch die erste Betriebseinheit akzeptiert ist, wenn der Energiesparmodus eingestellt ist, auf die Identifikationsinformationen zurückzugreifen und unter den zwei oder den mehreren Geräten (3) das Gerät (3), das der Steuerungsbedingung nicht genügt, von Geräten (3) auszuwählen, die steuerbar sind, wenn der Energiesparmodus eingestellt ist.

## Revendications

1. Dispositif de gestion d'équipement configuré pour gérer deux ou plusieurs équipements (3), comprenant :
une unité de mémoire (21) configurée pour mémoriser, pour chacun des deux ou plusieurs équipements (3), une relation de correspondance entre une demande d'utilisateur, un équipement (3) et une condition de commande pour que l'équipement (3) soit dans un état de fonctionnement correspondant à la demande d'utilisateur ;
une première unité d'opération configurée pour accepter une opération d'entrée de la demande d'utilisateur ;
une unité de sélection (23) configurée pour sélectionner un équipement (3) qui ne satisfait pas la condition de commande pour des équipements (3) qui sont associés, dans la relation de correspondance mémorisée dans l'unité de mémoire, à la demande d'utilisateur acceptée par la première unité d'opération, parmi les deux ou plusieurs équipements (3) ; et
une unité de signalement configurée pour signaler l'équipement (3) qui est sélectionné par l'unité de sélection (23).

2. Dispositif de gestion d'équipement selon la revendication 1, comprenant en outre :
une seconde unité d'opération configurée pour accepter une opération d'entrée d'un contenu de commande se rapportant à l'équipement (3) signalé par l'unité de signalement ; et
une unité de commande d'équipement (24) configurée pour commander l'équipement (3) signalé par l'unité de signalement, en fonction du contenu de commande accepté par la seconde unité d'opération.

3. Dispositif de gestion d'équipement selon la revendication 2, dans lequel la seconde unité d'opération est configurée pour accepter l'opération d'entrée du contenu de commande dans une plage dans laquelle la condition de commande de l'équipement est satisfaite.

4. Dispositif de gestion d'équipement selon l'une quelconque des revendications 1 à 3, comprenant en outre :
une unité d'acquisition de l'heure configurée pour acquérir une heure actuelle,
dans lequel l'unité de mémoire (21) est configurée pour mémoriser la relation de correspondance pour chacun des intervalles horaires prédéterminés, et
dans lequel l'unité de sélection (23) est configurée pour sélectionner l'équipement (3) qui ne satisfait pas la condition de commande venant des équipements (3) qui sont associés, dans la relation de correspondance d'un intervalle horaire incluant l'heure actuelle, à la demande d'utilisateur acceptée par la première unité d'opération.

5. Dispositif de gestion d'équipement selon l'une quelconque des revendications 1 à 4, comprenant en outre :
une unité d'acquisition de date configurée pour acquérir une date actuelle,
dans lequel l'unité de mémoire (21) est configurée pour mémoriser la relation de correspondance pour chacune des saisons prédéterminées, et
dans lequel l'unité de sélection (23) est configurée pour sélectionner l'équipement (3) qui ne satisfait pas la condition de commande venant des équipements (3) qui sont associés, dans la relation de correspondance d'une saison incluant la date actuelle, à la demande d'utilisateur acceptée par la première unité d'opération.

6. Dispositif de gestion d'équipement selon l'une quelconque des revendications 1 à 5, comprenant en outre :
une unité d'activation configurée pour activer un mode d'économie d'énergie,
dans lequel l'unité de mémoire (21) est configurée pour mémoriser, en association avec la relation de correspondance, des informations d'identification qui indiquent si l'équipement (3) peut ou non être commandé quand le mode d'économie d'énergie est activé, et
dans lequel l'unité de sélection (23) est configurée pour, dans un cas où la demande d'utilisateur est acceptée par la première unité d'opération quand le mode d'économie d'énergie est activé, se consulter les informations d'identification et sélectionner l'équipement (3) qui ne satisfait pas la condition de commande venant des équipements (3) qui peuvent être commandés quand le mode d'économie d'énergie est activé, parmi les deux ou plusieurs équipements (3).
